# EUROPÄISCHE PATENTSCHRIFT

(11) **EP 1 766 207 B1**
(45) Veröffentlichungstag und Bekanntmachung des Hinweises auf die Patenterteilung: **04.05.2011**
(21) Anmeldenummer: 05770013.0
(22) Anmeldetag: 12.07.2005
(51) Int. Cl.: F01P 11/06, F01P 11/08, F01P 5/10, F01P 7/16, F01M 11/03, F01M 5/00, F01M 11/08

(54) **ÖL-KÜHLMITTEL-MODUL MIT KÜHLLMITTELPFLEGESYSTEM**
OIL/COOLANT MODULE WITH COOLANT TREATMENT SYSTEM
MODULE HUILE/LIQUIDE DE REFROIDISSEMENT AVEC SYSTEME D'ENTRETIEN DU LIQUIDE DE REFROIDISSEMENT

(30) Priorität: 14.07.2004 DE 4011115 U; 23.11.2004 DE 4018136 U
(43) Veröffentlichungstag der Anmeldung: 28.03.2007
(73) Patentinhaber: Hengst GmbH & Co. KG, 48147 Münster (DE)
(72) Erfinder: WILMINK, Jörg, 48465 Schüttorf (DE); HAASE, Reiko, 73061 Ebersbach (DE)
(74) Vertreter: Habbel, Ludwig
(86) Internationale Anmeldenummer: PCT/DE2005/001232
(87) Internationale Veröffentlichungsnummer: WO 2006/005329

(56) Entgegenhaltungen:
- EP-A- 0 898 060
- DE-B- 1 020 831
- US-A- 5 753 116
- US-A- 5 988 265
- US-A1- 2002 023 614
- US-A1- 2003 029 394

## Beschreibung

Die Erfindung betrifft ein Öl-Kühlmittel-Modul nach dem Oberbegriff des Anspruches 1 sowie einen dafür geeigneten Filtereinsatz. Das Kühlmittel des Verbrennungsmotors wird im Rahmen des vorliegenden Vorschlags kurz und vereinfachend auch als "Kühlwasser" bzw. "Wasser" bezeichnet.

Ein derartiges Öl-Kühlmittel-Modul ist aus der Praxis bekannt.

Aus der DE DE 10 20 831 B ist ein Öl-Kühlmittel-Modul bekannt, welches einen Ölfilter, einen Wasserfilter und einen Öl/Wasser-Wärmetauscher enthält.

Aus der EP 898 060 B1 ist ein Öl-Kühlmittel-Modul für einen Verbrennungsmotor bekannt, welches ein Ölfilter und einen Öl-/Wasser-Wärmetauscher aufweist.

Diese vorbekannten Öl-Kühlmittel-Module stellen jeweils eine Art Pflegeeinheit für das Öl des Verbrennungsmotors dar, denn durch den Ölfilter wird einerseits die Qualität des Öls sichergestellt, und durch den Wärmetauscher wird andererseits seine optimale Betriebstemperatur bewirkt: Da sich das Kühlwasser schneller erwärmt als das Öl, wird durch den Öl/Wasser-Wärmetauscher das Öl nach dem Motorstart erwärmt, so dass es möglichst schnell seine optimale Betriebstemperatur erreicht. Da anschließend das Kühlwasser durch den im Kühlmittelkreislauf vorgesehenen Kühler auf eine Temperatur gekühlt wird, die niedriger ist als die maximal zulässige Öltemperatur, kann durch den Wärmetauscher das Öl während des weiteren Betriebs des Motors gekühlt werden, so dass es zuverlässig innerhalb seines vorgesehenen Temperaturbereiches gehalten werden kann.

Der Erfindung liegt die Aufgabe zugrunde, ein gattungsgemäßes Öl-Kühlmittel-Modul dahingehend zu verbessern, dass es durch eine hohe Integrationsdichte ermöglicht,
■ den erforderlichen Raumbedarf für den Verbrennungsmotor und insbesondere dessen periphere Komponenten so gering wie möglich zu halten,
■ die Betriebssicherheit des Motors dadurch zu erhöhen, dass die Anzahl abzudichtender Verbindungsstellen zwischen separaten Komponenten möglichst gering ist,
■ dem Konstrukteur des Verbrennungsmotors oder eines den Verbrennungsmotor aufnehmenden Fahrzeugs einen möglichst großen Gestaltungsfreiraum zu ermöglichen, und
■ die Zugänglichkeit zu den zu wartenden Komponenten des Verbrennungsmotors für das Wartungspersonal zu vereinfachen.

Diese Aufgabe wird durch ein Ol-Kühlmittel-Modu! mit den Merkmalen des Anspruches 1 gelöst

Die Erfindung schlägt mit anderen Worten die Integration eines Kühlmittelpflegesystems in das Öl-Kühlmittel-Modul vor. Das Öl-Kühlmittel-Modul wird somit zu einer zentralen Pflegeeinheit für die motorrelevanten Flüssigkeiten, nämlich für das Kühlwasser und für das Öl, die an einer zentralen Stelle gepflegt und gewartet werden können. Die zusätzliche Aufnahme des Kühlmittelpflegesystems in das Öl-Kühlmittel-Modul ergibt die folgenden Vorteile:
■ Strömungskanäle für das Wasser können kurz dimensioniert werden. Allein hierdurch wird der Raumbedarf reduziert, da keine externen Leitungen verlegt sein müssen.
■ Durch die innerhalb des Öl-Kühlmittel-Moduls integrierten Strömungskanäle werden nicht nur Strömungsverluste in Folge von Strömungswiderständen reduziert, sondern durch die Integration in ein einziges Gehäuse werden auch die Stellen potentieller Leckagen reduziert.
■ Die Zugänglichkeit bei Wartungsarbeiten zu den entsprechenden Komponenten kann verbessert werden, denn an einer einzigen, gut zugänglichen Stelle ist nun der Zugang sowohl zu den Wartungskompönenten des Öls als auch zu denen des Kühlmittels möglich.
■ Die konstruktiven Freiheiten für die Gestaltung beispielsweise eines Fahrzeugmotorraumes werden verbessert, denn lediglich an dieser einen vorgenannten Stelle muss eine Zugänglichkeit zu den Wartungskomponenten der Motorflüssigkeit berücksichtigt werden, während an anderen Stellen ein verfügbarer Einbauraum nun besser:genutzt werden kann.

Das vorschlagsgemäß vorgesehene Kühlmittelpflegesystem weist einen Wasserfilter auf sowie als Inhibitoren bezeichnete Pflegezusätze, die beispielsweise als Korrosions- und Frostschutz im Kühlwasser dienen. Sie können beispielsweise als Feststofftabletten vorliegen, die sich im Kühlmittel auflösen und die löslichen Inhibitoren freisetzen, oder sie können in einer geschlossenen, flüssigkeitsdichten Patrone vorliegen.

Eine eventuell vorgesehene Umhüllung, die beispielsweise eine Feststofftablette vor Luftfeuchtigkeit schützt, oder die in Form der vorgenannten Patrone bei flüssigen Pflegezusätzen ohnehin vorgesehen ist, kann manuell geöffnet werden, bevor die Pflegezusätze in den Kühlmittelkreislauf eingebracht werden.

Besonders vorteilhaft kann allerdings vorgesehen sein, dass diese Umhüllung automatisch geöffnet wird, wenn sie in das Öl-Kühlmittel-Modul eingeführt wird, so dass die Pflegezusätze automatisch in den kühlwasserkreislauf gelangen. Somit ist sichergestellt, dass die in der Umhüllung vorgesehenen Pflegezusätze in den Kühlmittelkreislauf gelangen. Zudem kann auf diese Weise ein Hautkontakt des Benutzers mit den Pflegezusätzen sicher vermieden werden. Zur automatischen Öffnung kann beispielsweise im Öl-Kühlmittel-Modul eine Störkontur vorgesehen sein, welche die Umhüllung verletzt und auf diese Weise öffnet, wenn die Umhüllung in das Öl-Kühlmittel-Modul eingeführt wird.

Vorteilhaft kann vorgesehen sein, die Pflegezusätze gemeinsam mit einem Filterelement des Wasserfilters zu handhaben. So können Platz und Anzahl der erforderlichen Bauteile eingespart werden, im Vergleich dazu einer sonst erforderlichen separaten Öffnung mit eigenem Verschlussdeckel zum Einbringen der Pflegezusätze in das Öl-Kühlmittel-Modul. Zudem kann sichergestellt werden, dass die Pflegezusätze regelmäßig dem Kühlmittelsystem zugesetzt werden, wenn nämlich das Filterelement in den Wasserfilter eingesetzt wird. Die Pflegezusätze gelangen zunächst erstmalig bei der Montage des Kühlmittelpflegesystems gemeinsam mit dem Filterelement in das Kühlwassersystem und frischen dieses weiterhin bei jedem Filterwechsel durch Einsatz eines neuen, mit Inhibitoren versehenen Filterelementes auf.

Bei einer z. B. etwa hohlzylindrischen Ausgestaltung des Filtereinsatzes können die Pflegezusätze im hohlen Innenraum des des Filtereinsatzes angeordnet sein.

Vorzugsweise kann ein Nebenstromölfilter vorgesehen sein, der in an sich bekannter Weise vorteilhaft als Zentrifigualabscheider ausgestaltet sein kann. Der Nebenstromölfilter ermöglicht eine besonders zuverlässige Ölfiltration.

Vorzugsweise kann der Nebenstromölfilter zusammen mit dem Hauptstrom-Ölfilter in demselben Gehäuse angeordnet sein. So wird eine platzsparende Anordnung beider Ölfiltereinrichtungen ermöglicht und bei der konstruktiven Auslegung des Gehäuses des Öl-Kühlmittel-Moduls wird die Anordnung der einzelnen Ölkanäle vereinfacht.

Vorteilhaft kann ein Kühlwasserthermostat vorgesehen sein und in das Öl-Kühlmittel-Modul integriert sein, so dass in an sich bekannter Weise durch dieses Thermostat ein großer oder ein kleiner Kühlwasserkreislauf freigeschaltet wird. Die Integration des Thermostats in das Öl-Kühlmittel-Modul reduziert die Anzahl ggf. sonst erforderlicher Verschlauchungen, Insbesondere durch die eintrittsseitige Anordnung des Thermostats kann der im Öl-Kühlmittel-Modul vorhandene Platz optimal genutzt werden kann und eventuell ansonsten vorgesehene, ungenutzte Leervolumina im Öl-Kühlmittel-Modul können auf diese Weise vermieden werden.

Vorteilhaft kann ein Anschluss für eine Einrichtung zum Temperieren von Kraftstoff, also zur Kraftstoffvorwärmung oder zur Kühlung von Kraftstoff vorgesehen sein, so dass entweder das sich erwärmende Kühlwasser des Verbrennungsmotors den Kraftstoff bei niedrigen Außentemperaturen vorwärmen und beispielsweise paraffinierte Anteile von Dieselkraftstoff verflüssigen kann, oder bei hoher Motorleistung und hohen Außentemperaturen der im Motorraum befindliche Kraftstoff gekühlt und die Bildung von Dampfblasen im Kraftstoff verhindert werden kann.

Vorteilhaft kann ein Anschluss zur Kabinenheizung am Öl-Kühlmittel-Modul vorgesehen sein, so dass bei Verwendung des Verbrennungsmotors in einem Kraftfahrzeug warmes Wasser für die Fahrzeug-innenraumheizung entnommen werden kann.

Vorteilhaft kann ein Anschluss zur Kühlung eines Luftpressers, wie er beispielsweise für die Bremsanlage eines Lastkraftwagens vorgesehen ist, am Öl-Kühlmittel-Modul vorgesehen sein.

Schließlich kann die Integrationsdichte des Öl-Kühlmittel-Moduls dadurch besonders hoch sein, dass ein Anschluss zum Kühlmittel-Ausgleichsbehälter vorgesehen ist.

Durch die letztgenannten Anschlüsse wird ein Großteil sonst üblicher, beispielsweise in Schlauchleitungen vorgesehener Abzweigstellen erübrigt und damit die Gefahr von Leckagestellen reduziert, so dass insgesamt ein besonders betriebssicheres Kühlmittelsystem geschaffen wird und leckagebedingte umweltschädliche Emissionen mit großer Wahrscheinlichkeit vermieden werden, da die Anzahl von Schläuchen und dementsprechenden Schlauch-Anschlussstellen reduziert werden kann.

Vorteilhaft kann ein Anschluss,für eine Einrichtung zum Kühlen eines elektrischen Generators des Verbrennungsmotors vorgesehen sein, so dass die Anordnung eines derartigen Generators auch bei thermisch ungünstigen Verhältnissen ermöglicht wird und dementsprechend die optimale Anbringung eines Generators zur optimalen Raumnützung auch bei knapp bemessenem Bauraum in einem Fahrzeug ermöglicht wird.

Vorteilhaft kann das im Öl-Kühlmittel-Modul vorgesehene Thermostat als Ringschieber-Ventil ausgestaltet sein, beispielsweise im Gegensatz zu ansonsten bekannten Teller-Ventilen. Durch die Ausgestaltung als Ringschieber-Ventil ist eine besonders günstige und platzsparende Führung der Strömungskanäle möglich, so dass die baulichen Abmessungen des Öl-Kühlmittel-Moduls gering gehalten werden können.

Vorzugsweise sind Befüllöffnungen sowohl für Öl als auch für das Kühlmittel vorgesehen, so dass das Öl-Kühlmittel-Modul als ein Servicepunkt im Motorraum ausgestaltet sein kann und an leicht zugänglicher Stelle vorgesehen sein kann, wo einerseits Kühlwasser nachgefüllt werden kann und andererseits der Ölstand kontrolliert und gegebenenfalls Öl nachgefüllt werden kann.

Vorteilhaft kann im Wärmetauscher des Öl-Kühlmittel-Moduls die Führung des Öls und des Wassers diagonal im Gegenstrom erfolgen. Hierdurch werden optimal lange Wege für die Flüssigkeiten und dementsprechend optimal lange Verweilzeiten im Wärmetauscher verwirklicht, so das ein besonders intensiver Wärmeübergang erfolgen kann.

Vorteilhaft kann am Öl-Kühlmittel-Modul ein Anschluss vorgesehen sein, der zum Kurbelgehäuse des Verbrennungsmotors führt, wobei in diesem einzigen Anschluss - also in einer einzigen Öffnung - mehrere Rückflussleitungen zusammengeführt sind, die innerhalb des Öl-Kühlmittel-Moduls ansonsten separate Kanäle aufweisen. Dabei kann beispielsweise eine Rücklaufleitung von einem Nebenstromölfilter zu diesem Anschluss führen, ebenso wie eine Ablaufleitung vom Haupt-Ölfilter, die beispielsweise bei einem Wechsel des Filtereinsatzes das Abfließen von Restöl aus dem Filtergehäuse ermöglicht, und ebenso kann ein Einfüllkanal von der vorerwähnten Öl-Befüllöffnung zu diesem Anschluss führen. Dadurch, dass diese mehreren Leitungen bzw. Kanäle zu einer einzigen Anschlussöffnung führen, ist die Zahl der abzudichtenden Stellen geringer, so dass eine verbesserte Betriebssicherheit des Öl-Kühlmittel-Moduls bzw. des mit dem Öl-Kühlmittel-Modul versehenen Verbrennungsmotors bewirkt wird.

Vorteilhaft können auch kühlmittelseitig mehrere Leitungen zu einem einzigen Anschluss, also einer einzigen Austritts- oder einer einzigen Eintrittsöffnung zusammengefasst sein. Druckseitig können dies beispielsweise Anschlüsse sein, die zur Kühlung eines Abgasrückführungssystems oder zur Temperierung des Kraftstoffs vorgesehen sind, wobei zusätzlich zu diesen beiden vorgenannten Einrichtungen auch weitere Aggregate vorgesehen sein können, die mittels des Kühlwassers gekühlt werden können.

Auf der Saugseite der Wasserpumpe können die Anschlüsse beispielsweise für Einrichtungen zur Kühlung eines Luftpressers oder zur Kühlung eines Generators zu einer einzigen Eintrittsöffnung zusammengefasst sein. Die Saugseite der Wasserpumpe kann vorzugsweise ausschließlich in das Ol-Kühlmittel-Modul integriert sein, so dass der Saugdruck der Wasserpumpe ausschließlich im Öl-Kühlmittel-Modul existiert und alle Funktionen des Verbrennungsmotors, welche einen Rückfluss zur Saugseite der Wasserpumpe benötigen, an einen Kanal im Öl-Kühlmittel-Modul anschließen bzw. zu einem einzigen Kanal zusammengefasst sind. Dies können beispielsweise wasserführende Kanäle der Heizung, der Befüllleitung für einen Ausgleichsbehälter, des Luftpressers und ähnliche sein.

Vorteilhaft können Druck- und Saugseite der Wasserpumpe lediglich durch eine Wand getrennt sein, so dass eine sehr einfache Integration eines Wasserfilters in das Öl-Kühlmittel-Modul ermöglicht wird.

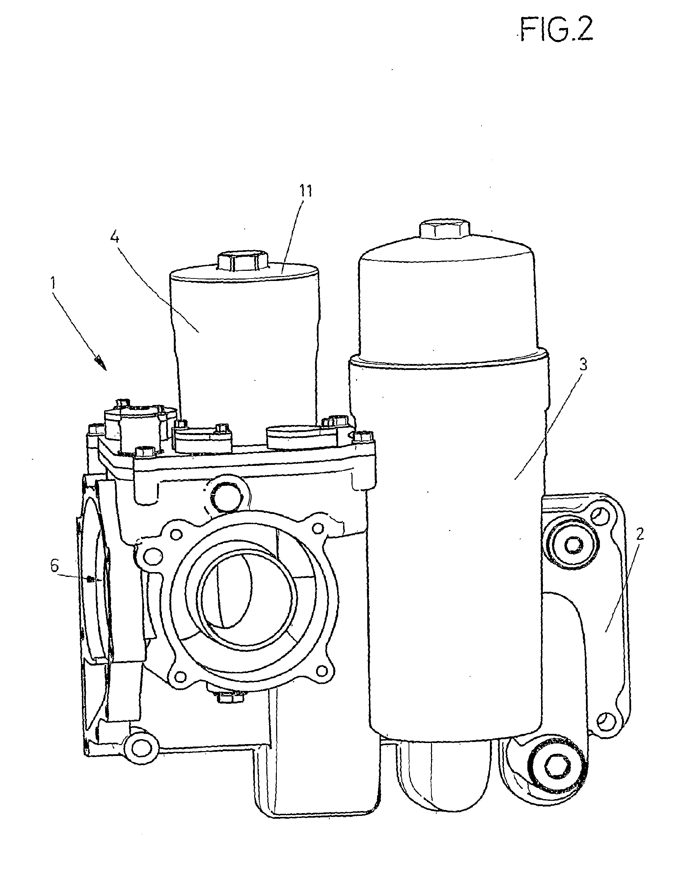

Ein Ausführungsbeispiel der Neuerung wird anhand der rein schematischen Zeichnungen nachfolgend näher erläutert. Dabei zeigen die
- Fig. 1-6: unterschiedliche, teilweise perspektivische Ansichten des Öl-Kühlmittel-Moduls,
- Fig. 7: einen Schnitt durch den Bereich des Kühlmittelpflege- systems, und
- Fig. 8: ein Funktionsschema des Öl-Kühlmittel-Moduls.

In den Zeichnungen ist mit 1 insgesamt ein so genanntes Öl-Kühlmittel-Modul bezeichnet, welches ein zentrales Gehäuse 2 aufweist, wobei dieses Gehäuse auch die becherförmigen Gehäuse eines Ölfilters 3 sowie eines Kühlmittelpflegesystems 4 ausbildet. Das Gehäuse 2 weist eine seitliche Anschlussfläche 5 auf, mit welcher es an den Motorblock eines Verbrennungsmotors angeschlossen werden kann.

An der vorderen Stirnseite bildet das Gehäuse 2 den Raum zur Aufnahme eines Pumpenflügelrades einer Wasserpumpe aus. Das Wasserpumpengehäuse, als Teil des Gehäuses 2, ist separat mit 6 gekennzeichnet. Diese Wasserpumpe wird beispielsweise elektrisch oder in an sich bekannter Weise vom Kurbelwellenstumpf des Verbrennungsmotors über Poly-V-Scheiben und einen Riemen angetrieben.

Im Bereich der Anschlussfläche 5 ist ein Wärmetauscher 7 vorgesehen, in welchem ein Wärmeaustausch zwischen dem Öl und dem Kühlwasser des Verbrennungsmotors erfolgt, wobei im Inneren des Gehäuses 2 eine Vielzahl von Strömungskanälen für Öl und Wasser vorgesehen ist und u. a. ein Kühlwasserstrom von der Wasserpumpe zum Wärmetauscher 7 geführt ist.

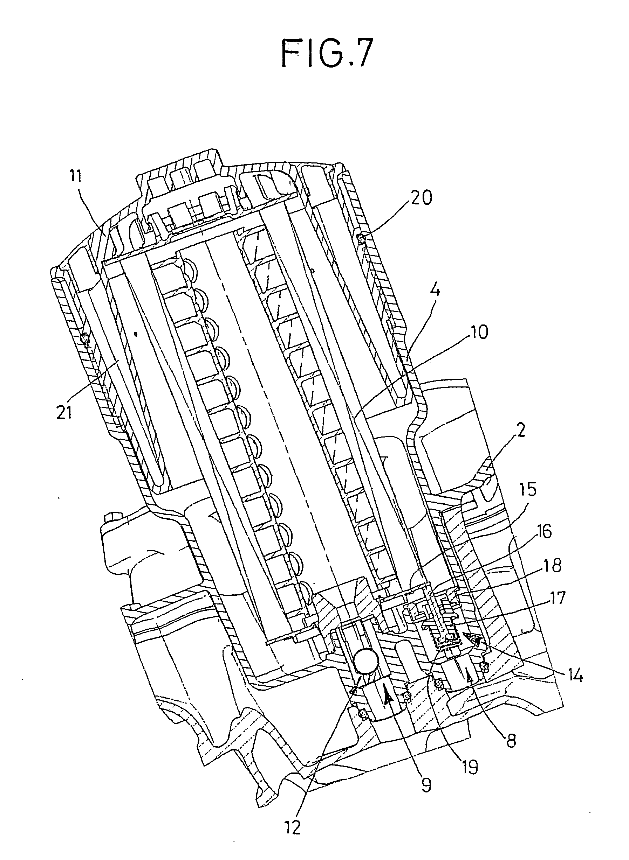

Aus Fig. 7 ist ein Schnitt durch das Kühlmittelpflegesystem 4 ersichtlich. Dieses weist einen Zulauf 8 für ungefiltertes Kühlwasser auf sowie einen Rücklauf 9 für gefiltertes Kühlwasser, wobei im Inneren des Kühlmittelpflegesytems 4 das Kühlwasser durch einen auswechselbaren Filtereinsatz 10 tritt, der über eine Clipsverbindung mit einem Deckel 11 des Kühlmittelpflegesystems 4 verbunden ist. Im Bereich des Rücklaufes 9 ist ein Rückschlagventil 12 vorgesehen, dessen als Kugel ausgebildeter Ventilkörper das Ablaufen des gereinigten Kühlwassers aus dem Inneren des Filtereinsatzes 10 ermöglicht. Herrscht im restlichen Kühlmittelkreislauf ein höherer Druck als im Inneren des Kühlmittelpflegesystems 4, schließt diese Kugel jedoch den Rücklauf 9 zum Innenraum des Kühlmittelpflegesystems 4 ab.

Auch im Zulauf 8 ist ein Sperrventil 14 vorgesehen, welches allerdings nicht druck-, sondern wegbetätigt ist: Der Filtereinsatz 10 drückt mit einer unteren Endscheibe 15 gegen einen Stößel 16, der gemeinsam mit einem Ventilkörper 17 des Sperrventils 14 beweglich ist, so dass dieser Ventilkörper 17 zwangsweise von seinem zugeordneten Ventilsitz 18 beabstandet ist.

Wird der Deckel 11 mitsamt dem Filtereinsatz 10 vom Gehäuse des Kühlmittelpflegesystems 4 abgeschraubt, entfällt die mittelbare Beaufschlagung des Ventilkörpers 17 durch den Filtereinsatz 10 und das Sperrventil 14 schließt. Die Schließbewegung erfolgt entweder, da der Ventilkörper 17 mittels einer Feder 19 gegen den Ventilsitz 18 gedrückt wird, oder aufgrund des im übrigen Kühlmittelkreislauf höheren Drucks im Vergleich zum Innenraum des Kühlmittelpflegesystems 4, wenn nämlich beispielsweise das Kühlmittel Betriebstemperatur hat und dementsprechend unter Druck steht.

Ein vergleichsweise langer Überlappungsbereich zwischen dem Deckel 11 und dem Gehäuse des Kühlmittelpflegesystems 4 und die Anordnung einer Dichtung 20 in ausreichendem Abstand von der Oberkante dieses Gehäuses stellt sicher, dass das Sperrventil 14 geschlossen ist, bevor die Dichtung 20 an die Oberkante des becherförmigen Gehäuses des Kühlmittelpflegesystems 4 gelangt, so dass ein Austritt des heißen und ggf. unter Druck stehenden Kühlmittels zuverlässig verhindert wird: erstens wird die Wirkung der Dichtung 20 erst aufgehoben, wenn das Sperrventil 14 und ggf. das Rückschlagventil 12 geschlossen sind, und zweitens erfolgt ein Druckabbau im Inneren des Kühlmittelpflegesystems 4 dadurch, dass ein am Deckel 11 angeformter Verdrängerkörpe,21 das Flüssigkeitsvolumen im Inneren des Kühlmittelpflegesystems 4 begrenzt, so dass bei Entnahme des Deckels 11 der Flüssigkeitsstand innerhalb des Kühlmittelpflegesystems 4 absinkt, da der Verdrängerkörper 21 zunehmend aus dem Innenraum des Kühlmittelpflegesystems 4 entfernt, nämlich mitsamt dem Deckel 11 herausgeschraubt wird. Das Gleiche gilt für das Volumen des Filtereinsatzes 10, welcher zunehmend aus dem becherförmigen Gehäuse des Kühlmittelpflegesystems 4 entfernt wird, wenn der Deckel 11 abgeschraubt wird, so dass ein Überdruck im Inneren des Kühlmittelpflegesystems 4 zuverlässig ausgeschlossen ist, sobald die Dichtung 20 an die Oberkante des Gehäuses gerät.

Auch der Ölfilter 3 weist ein becherförmiges Gehäuse auf. Im Gegensatz zum Kühlmittelpflegesystem 4 ist dieses becherförmige Gehäuse kürzer ausgestaltet, so dass ein erheblich größerer Anteil der Gesamthöhe des Ölfilters 3 durch einen Deckel 22 gebildet wird. Dieser Deckel 22 enthält einen Nebenstromölfilter, der als Zentrifuge ausgestaltet ist und deren Rotor beim Service zusammen mit dem Filtereinsatz des Ölfilters 3 ausgetauscht wird.

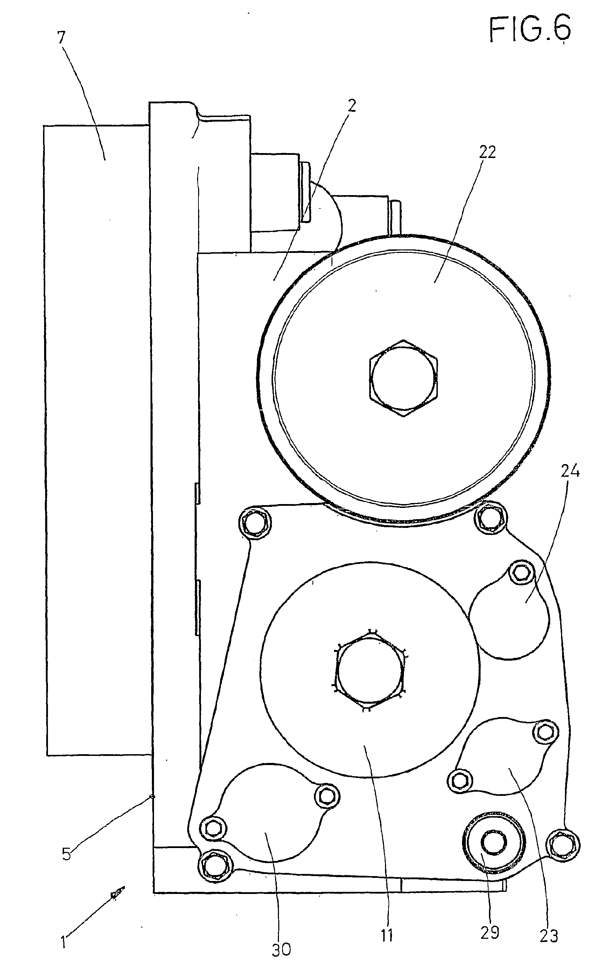

Auf der Seite des Öl-Kühlmittel -Moduls 1, die der Anschlussfläche 5 gegen-überliegt, sind mehrere Anschlüsse vorgesehen, beispielsweise ein Anschluss 23 für den Rücklauf einer Kabinenbeheizung, oder ein Anschluss 24, der gemäß Fig. 6 mit einem Verschlussstopfen versehen ist und zum Anschluss eines Oleinfüllstutzens dient. Alternativ zu dem dargestellten Ausführungsbeispiel kann vorgesehen sein, je nach Lage und Zugänglichkeit des Öl-Kühlmittel-Moduls 1 beispielsweise im Motorraum eines Kraftfahrzeugs oder als frei stehendes Kraft-/Wärme-Aggregat, dass das Öl-Kühlmittel-Modul 1 selbst einen Öleinfüllstutzen ausbildet.

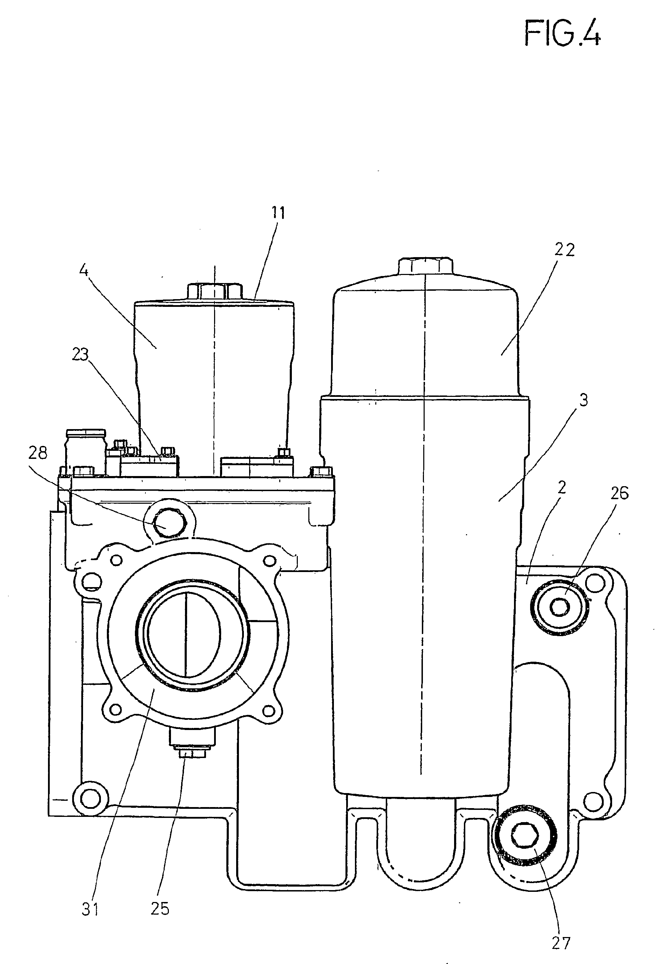

Bei 25 ist in Fig. 4 ein Anschluss für den Rücklauf einer Kraftstoffvorwärmung gekennzeichnet und mit 26 ein Anschluss für eine Kühlmittelvorwärmung, wobei diese beispielsweise mittels eines elektrischen oder kraftstoffbetriebenen Zusatzheizgerätes erfolgen kann.

In Fig. 4 ist weiterhin mit 27 ein Anschluss gekennzeichnet, der zur Erstbefüllung des Verbrennungsmotors mit Öl vorgesehen ist, und mit 28 ist der Anschluss für den Rücklauf einer Luftpresserkühlung gekennzeichnet.

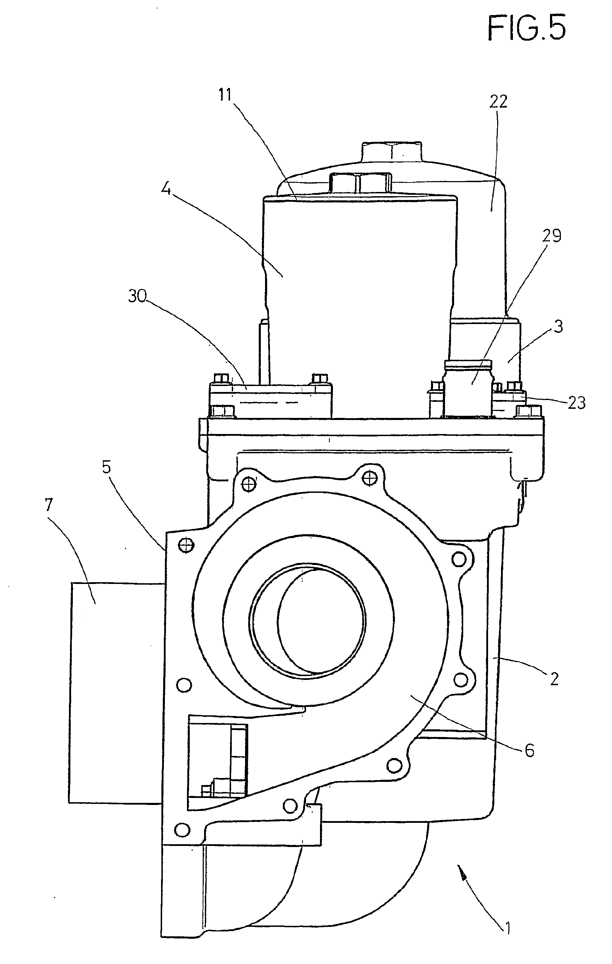

In Fig. 5 ist mit 29 ein Anschluss für die Befüllfeitung eines Kühlmittel-Ausgleichsbehälters gekennzeichnet und mit 30 der Anschluss für einen Vorlauf der Kühlung eines Abgas-Rückführungs-Systems. In Fig. 4 ist mit 31 das vom Gehäuse 2 ausgebildete Gehäuse eines Kühlwasserthermostats gekennzeichnet.

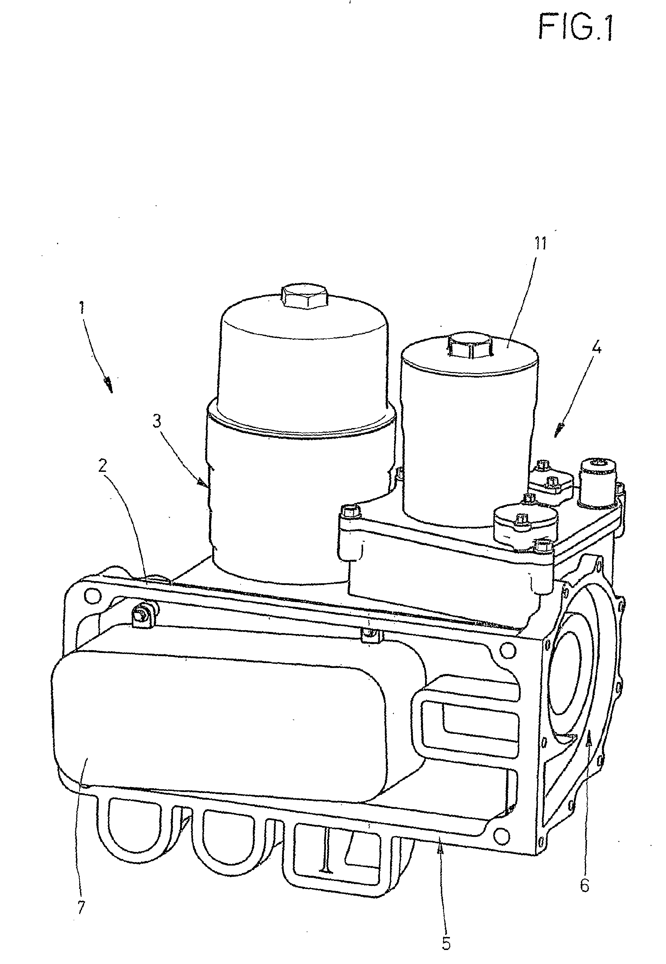

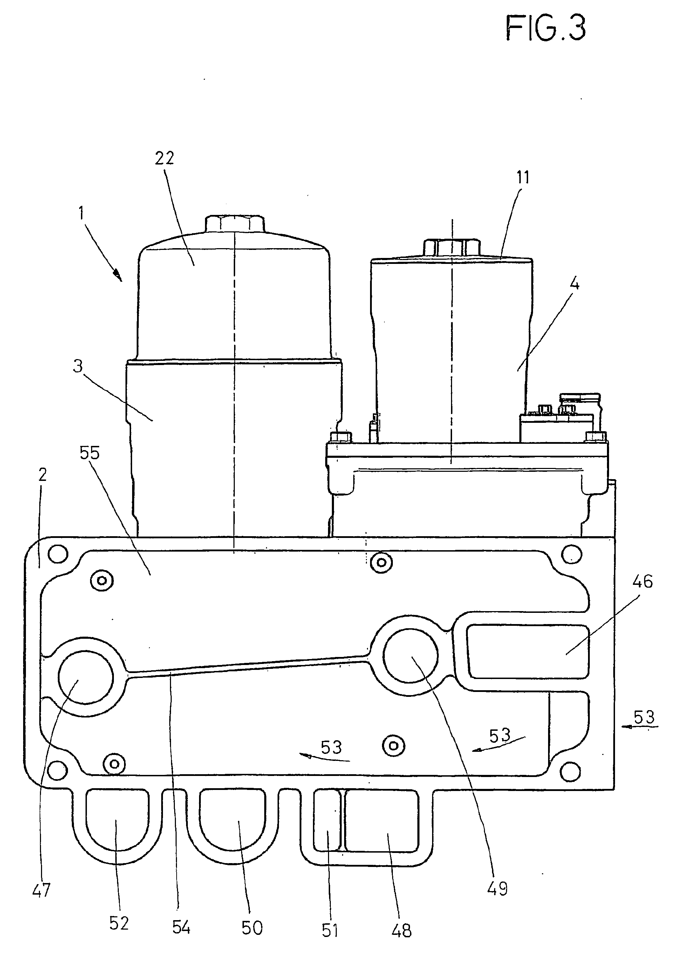

Fig. 3 zeigt eine ähnliche Ansicht wie Fig. 1, allerdings mit demontiertem Wärmetauscher 7. Das Gehäuse 2 des Öl-Kühlmittel-Moduls 1 weist hier eine Vielzähl von Ein- bzw. Austrittsöffnungen für Öl und Wasser auf: Mit 46 ist eine Öffnung bezeichnet, über welche Wasser für den kleinen Kühlkreislauf - also den Kurzschluss-Kreislauf - in das Öl-Kühlmittel-Modul 1 gelangt. Mit 47 ist eine Öffnung bezeichnet, über welche heißes, ungefiltertes Öl in den Wärmetauscher 7 gelangen kann. Mit 48 ist eine Öffnung bezeichnet, die als Sammelrücklauf bezeichnet werden kann und über welche druckloses Öl zum Kurbelgehäuse des Verbrennungsmotors strömen kann. Über die Öffnung 49 gelangt abgekühltes Öl aus dem Wärmetauscher 7 in das Öl-Kühlmittel-Modul 1 und zum Ölfilter 3, wobei das anschließend gefilterte Reinöl durch die Öffnung 50 zum Gehäuse des Verbrennungsmotors und von dort zu den einzelnen Schmierstellen gelangt. Mit 51 ist eine Öffnung bezeichnet, über welche Öl von einem Ablassventil des Ölfilters 3 in das Kurbelgehäuse des Motors strömen kann.

Das Öl, welches über die Öffnung 47 in den Wärmetauscher 7 strömt, ist sowohl ungekühlt als auch ungefiltert. Ein Teilstrom dieses Öls kann durch die Öffnung 52 zum Nebenstromölfilter gelangen. Dadurch, dass die Durchströmung des Wärmetauschers 7 für diesen Teilstrom vermieden wird und dementsprechend weniger Druckverluste vor der Zentrifuge des Nebenstromfilters auftreten, kann auch mehr Leistungsenergie in der Zentrifuge für die Abscheidungsleistung genutzt werden, so dass ein besserer Wirkungsgrad dieses Nebenstromölfilters bewirkt wird.

Kühlwasser strömt entlang den mit 53 gekennzeichneten Pfeilen in das Gehäuse 2 des Öl-Kühlmittel-Moduls 1 ein und wird vor einer Trennwand 54 in den Wärmetauscher 7 umgelenkt. Es tritt aus dem Wärmetauscher 7 aus und gelangt in die großflächige Öffnung 55, durch welches es aus dem Gehäuse 2 des Öl-Kühlmittel-Moduls 1 herausströmt.

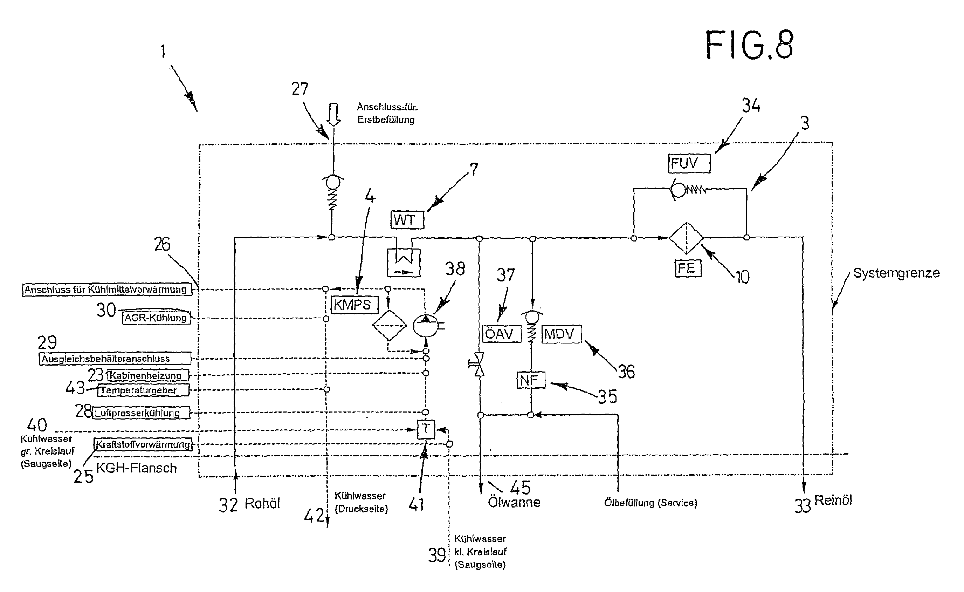

Fig. 8 zeigt das Funktionsschema des Öl-Kühlmittel-Moduls 1. Mit 32 ist der Zulauf für ungefiltertes Rohöl gekennzeichnet, welches zum Wärmetauscher 7 gelangt und von dort zum Ölfilter 3. Das Rohöl tritt durch den Filtereinsatz 10 und gelangt zum Reinölauslass, der bei 33 angedeutet ist. Bei verstopftem Filtereinsatz 10 kann das Rohöl den Filtereinsatz 10 mittels eines Filterumgehungsventils 34 umgehen und zum Auslass 33 gelangen. Ein Nebenstrom des ungefiltertes Rohöls wird durch einen Nebenstromölfilter 35 geführt, sofern ein ausreichender Mindestdruck vorliegt und ein Mindestdruckventil 36 geöffnet ist. Bei Unterschreiten des Mindestdrucks wird die gesamte Ölmenge dem Ölfilter 3 zugeführt.

Über ein Ölablassventil 37 kann der Ölfilter 3 vollständig entleert werden, beispielsweise bei einem Wechsel des Filtereinsatzes 10, so dass der Filtereinsatz 10 möglichst tropfarm aus dem Ölfiltergehäuse entnommen werden kann. Mit 45 ist ein Anschluss bezeichnet, der zur Ölwanne des Verbrennungsmotors führt und dem dieses ungefilterte Öl zugeführt wird. Ebenso kann frisches Öl, welches in den Motor eingefüllt werden soll, durch diesen Anschluss 45 in das Kurbelgehäuse des Motors gelangen, wenn das Öl-Kühlmittel-Modul 1 die entsprechende Befüllöffnung für Frischöl aufweist.

Abgesehen von den vorbeschriebenen Kanälen für den Ölkreislauf führt das Öl-Kühlmittel-Modul 1 auch das Kühlwasser: Eine Wasserpumpe ist bei 38 angedeutet. Zu ihrer Saugseite gelangt das Kühlwasser entweder über einen kleinen Kreislauf bei 39 oder über einen großen, durch einen Wasserkühler geführten Kreislauf bei 40, wobei ein Kühlwasserthermostat 41 temperaturabhängig einen der beiden Kreisläufe 39 bzw. 40 öffnet und zur Wasserpumpe 38 durchschaltet. Das Wasser wird auf der Druckseite der Wasserpumpe 31 durch den Wärmetauscher 7 geführt, wobei ein Teil der Kühlwassermenge durch den Filter des Kühlmittelpflegesystems 4 rezirkuliert wird und im übrigen die Hauptmenge des Kühlwassers bei einem Kühlwasserauslass 42 zur Motorkühlung abfließt, beispielsweise in das Motorgehäuse einströmt, an welches das Öl-Kühlmittel-Modul 1 angeflanscht ist.

Links am Rand des Öl-Kühlmittel-Moduls 1 sind die verschiedenen Anschlüsse schematisch angedeutet sowie ein Anschluss 43 für einen Temperaturgeber. Weiterhin weist das Öl-Kühlmittel-Modul 1 einen Anschluss 27 für eine beim Fahrzeughersteller erfolgende Erstbefüllung des Öl-Kühlmittel-Moduls 1 mit Motoröl auf.

## Patentansprüche

1. Öl-Kühlmittel-Modul für einen Verbrennungsmotor,
mit einem Ölfilter, einem Öl-/Wasser-Wärmetauscher, und einer als Wasserpumpe bezeichneten Kühlmittelpumpe, **gekennzeichnet durch**
ein Kühlmittelpflegesystem (4),
welches einen so genannten Wasserfilter aufweist,
und welches Pflegezusätze für den Kühlmittelkreislauf enthält.

2. Öl-Kühlmittel-Modul nach Anspruch 1, **dadurch gekennzeichnet, dass** die Pflegezusätze als Feststofftablette ausgestaltet sind, welche im Kühlmittel lösliche Inhibitoren enthält.

3. Öl-Kühlmittel-Modul nach einem der vorhergehenden Ansprüche, **dadurch gekennzeichnet, dass** die Pflegezusätze in einer geschlossenen, flüssigkeitsdichten Patrone angeordnet sind,

4. Öl-Kühlmittel-Modul nach Anspruch 2 oder 3, **dadurch** gekertnzeichnet, dass die Pflegezusätze in einer geschlossenen, flüssigkeitsdichten Umhüllung angeordnet sind.

5. Öl-Kühlmittel-Modul nach Anspruch 4, **dadurch gekennzeichnet, dass** die Umhüllung in Anpassung an das Öl-Kühlmittel-Modul derart ausgestaltet ist, dass sie beim Einsatz in das Öl-Kühlmiftel-Modul automatisch geöffnet wird.

6. Öl-Kühlmittel-Modul nach einem der vorhergehenden Ansprüche, **dadurch gekennzeichnet, dass** die Pflegezusätze mit einem Filtereinsatz des Wasserfilters gemeinsam handhabbar verbunden sind, derart, dass sie bei dem Einsetzen des Filtereinsatzes in das Öl-Kühlmittel-Modul (1) automatisch in den Kühlmittelkreislauf gelangen.

7. Öl-Kühlmittel-Modul nach einem der vorhergehenden Ansprüche, **gekennzeichnet durch** einen Nebenstromölfilter (35).

8. Öl-Kühlmittel-Modul nach Anspruch 7, **dadurch gekennzeichnet, dass** der Nebenstromölfilter (35) innerhalb desselben Gehäuses angeordnet ist wie der Ölfilter (3).

9. Öl-Kühlmittel-Modul nach Anspruch 7 oder 8, **dadurch gekennzeichnet, dass** der Nebenstromölfilter (35) als Zentrifugalabscheider ausgestaltet ist.

10. Öl-Kühlmittel-Modul nach einem der vorhergehenden Ansprüche, **gekennzeichnet durch**
eine Wasserpumpe (38), wobei die Saug und Druckseite der Wasserpumpe (38) sowie saug- und / oder druckseitige Anschlüsse des Wasserkreislaufs im Öl-Kühlmittel-Modul (1) vorgesehen sind,
und ein Thermostat (41),
welches eintrittsseitig, also auf der Saugseite der Wasserpumpe (38) angeordnet ist
und derart ausgestaltet ist, dass es abhängig von der Kühlmitteltemperatur
entweder einen kleineren, als Kurzschlusskreislauf bezeichneten Kühlmittelkreislauf unter Umgehung eines Kühlmittelkühlers zur Wasserpumpe (38) freischaltet oder einen größeren, **durch** den Kühlmittelkühler geführten Kühlmittelkreislauf zur Wasserpumpe (38) freischaltet, wobei im Öl-Kühlmittel-Modul (1) ein Kurzschlusskanal zum Thermostaten (41) vorgesehen ist, welcher einen Abschnitt des Kurzschlusskreislaufs bildet.

11. Öl-Kühlmittel-Modul nach einem der vorhergehenden Ansprüche, **dadurch gekennzeichnet, dass** ein als Ringschieber-Ventil ausgestaltetes Thermostat (41) vorgesehen ist.

12. Öl-Kühlmittel-Modul nach einem der vorhergehenden Ansprüche, **dadurch gekennzeichnet, dass** Befüllöffnungen für Öl und Kühlmittel vorgesehen sind.

13. Öl-Kühlmittel-Modul nach einem der vorhergehenden Ansprüche, **dadurch gekennzeichnet, dass** im Wärmetauscher (7) die beiden Flüssigkeiten diagonal im Gegenstrom geführt sind.

14. Öl-Kühlmittel-Modul nach einem der vorhergehenden Ansprüche,
**gekennzeichnet durch** einen Anschluss (45), welcher zum Kurbelgehäuse des Verbrennungsmotors führt, wobei innerhalb des Öl-Kühlmittel-Moduls (1) mehrere Kanäle zu diesem Anschluss (45) führen, welche als Rücklaufleitung von einem Nebenstromölfilter (35), sowie als Ablaufleitung von dem Ölfilter (3) sowie als Einfüllkanal von einer Öl-Befüllöffnung dienen.

15. Öl-Kühlmittel-Modul nach einem der vorhergehenden Ansprüche, **dadurch gekennzeichnet, dass** auf der Kühlmittel-Druckseite des Öl-Kühlmittel-Moduls (1) vorgesehene Anschlüsse - wie der Anschluss (30) für eine Einrichtung zur Kühlung eines Abgas-Rückführungs-Systems und der Anschluss (25) für eine Einrichtung zur Temperierung des Kraftstoffs - zu einem einzigen Kanal zusammengefasst sind, welcher eine einzige Austrittsöffnung an dem Öl-Kühlmittel-Modul (1) aufweist.

16. Öl-Kühlmittel-Modul nach einem der vorhergehenden Ansprüche, **dadurch gekennzeichnet, dass** auf der Kühlmittel-Saugseite des Öl-Kühlmittel-Moduls (1) vorgesehene Anschlüsse - wie der Anschluss (28) für eine Einrichtung zur Kühlung eines Luftpressers oder wie der Anschluss für eine Einrichtung zur Kühlung eines Generators - zu einem einzigen Kanal zusammengefasst sind, welcher eine einzige Eintrittsöffnung an dem Öl-Kühlmittel-Modul (1) aufweist.

17. Öl-Kühlmittel-Modul nach einem der vorhergehenden Ansprüche, **dadurch gekennzeichnet, dass** die Kanäle für die Druck- und die Saugseite der Wasserpumpe (38) durch nur eine Wand getrennt sind.

## Claims

1. Oil-coolant module for a combustion engine, having an oil filter, an oil/water heat exchanger and a coolant pump described as a water pump,
**characterised by**
a coolant treatment system (4) having a so-called water filter and containing treatment additives for the coolant circuit.

2. Oil-coolant module in accordance with claim 1, **characterised in that** the treatment additives are embodied as a solid tablet containing inhibitors which are soluble in the coolant.

3. Oil-coolant module in accordance with any one of the foregoing claims, **characterised in that** the treatment additives are disposed in a closed, liquid-tight cartridge.

4. Oil-coolant module in accordance with claim 2 or 3, **characterised in that** the treatment additives are disposed in a closed, liquid-tight cover.

5. Oil-coolant module in accordance with claim 4, **characterised in that** the cover is embodied adapted to the oil-coolant module so that it is automatically opened when inserted into the oil-coolant module.

6. Oil-coolant module in accordance with any one of the foregoing claims, **characterised in that** the treatment additives are connected to a filter insert of the water filter so that they can be handled together and so that they automatically pass into the coolant circuit when the filter insert is inserted into the oil-coolant module (1).

7. Oil-coolant module in accordance with any one of the foregoing claims, **characterised by** a bypass oil filter (35).

8. Oil-coolant module in accordance with claim 7, **characterised in that** the bypass oil filter (35) is disposed in the same housing as the oil filter (3).

9. Oil-coolant module in accordance with claim 7 or 8, **characterised in that** the bypass oil filter (35) is embodied as a centrifugal separator.

10. Oil-coolant module in accordance with any one of the foregoing claims, **characterised by** a water pump (38), where the suction and pressure sides of the water pump (38) and suction-side and/or pressure-side connections of the water circuit are provided in the oil-coolant module (1),
and a thermostat (41)
which is disposed on the intake side, that is, on the suction side of the water pump (38),
and which is embodied so that according to the coolant temperature it activates either a smaller coolant circuit described as a short-circuit circuit to the water pump (38), avoiding a coolant cooler,
or activates a larger coolant circuit run through the coolant cooler to the water pump (38), where a short-circuit passage to the thermostat (41) is provided in the oil-coolant module (1), which passage forms a section of the short-circuit circuit.

11. Oil-coolant module in accordance with any one of the foregoing claims, **characterised in that** a thermostat (41) embodied as an annular slide valve is provided.

12. Oil-coolant module in accordance with any one of the foregoing claims, **characterised in that** filling openings are provided for oil and coolant.

13. Oil-coolant module in accordance with any one of the foregoing claims, **characterised in that** the two fluids are conducted diagonally in the counter-current in the heat exchanger (7).

14. Oil-coolant module in accordance with any one of the foregoing claims, **characterised by** a connection (45) which runs to the crankcase of the combustion engine, where inside the oil-coolant module (1) several passages which serve as a return line from a bypass current filter (35) and as a drainage line from the oil filter (3) and as a filler passage from an oil filling hole run to this connection (45).

15. Oil-coolant module in accordance with any one of the foregoing claims, **characterised in that** connections provided on the coolant pressure side of the oil-coolant module (1), such as the connection (30) for a means of cooling an exhaust gas recirculation system and the connection (25) for a means of regulating the temperature of the fuel, are combined into a single passage having a single outlet opening on the oil-coolant module (1).

16. Oil-coolant module in accordance with any one of the foregoing claims, **characterised in that** connections provided on the coolant suction side of the oil-coolant module (1), such as the connection (28) for a means of cooling an air compressor or the connection for a means of cooling a generator, are combined into a single passage that has a single inlet opening on the oil-coolant module (1).

17. Oil-coolant module in accordance with any one of the foregoing claims, **characterised in that** the passages for the pressure side and the suction side of the water pump (38) are separated by only one wall.

## Revendications

1. Module à liquide de refroidissement d'huile pour moteur thermique, comprenant un filtre à huile, un échangeur thermique huile/eau et une pompe à liquide de refroidissement désignée comme pompe à eau, **caractérisé par**
un système (4) d'entretien du liquide de refroidissement présentant un filtre dit filtre à eau et contenant des additifs d'entretien pour le circuit de liquide de refroidissement.

2. Module à liquide de refroidissement d'huile selon la revendication 1, **caractérisé en ce que** les additifs d'entretien se présentent sous la forme d'un comprimé de matière solide contenant des inhibiteurs solubles dans le liquide de refroidissement.

3. Module à liquide de refroidissement d'huile selon l'une des revendications précédentes, **caractérisé en ce que** les additifs d'entretien sont agencés dans une cartouche fermée étanche aux liquides.

4. Module à liquide de refroidissement d'huile selon la revendication 2 ou 3, **caractérisé en ce que** les additifs d'entretien sont agencés dans une gaine fermée étanche aux liquides.

5. Module à liquide de refroidissement d'huile selon la revendication 4, **caractérisé en ce que** pour s'adapter au module à liquide de refroidissement d'huile, la gaine est configurée de sorte à s'ouvrir automatiquement lors de sa mise en place dans le module à liquide de refroidissement d'huile.

6. Module à liquide de refroidissement d'huile selon l'une des revendications précédentes, **caractérisé en ce que** les additifs d'entretien sont liés avec une cartouche filtrante du filtre à eau pour mouvoir les manier ensemble, de sorte que lorsque l'on introduit la cartouche filtrante dans le module (1) à liquide de refroidissement d'huile, ces additifs pénètrent automatiquement dans le circuit de liquide de refroidissement.

7. Module à liquide de refroidissement d'huile selon l'une des revendications précédentes, **caractérisé par** un filtre à huile (35) en dérivation.

8. Module à liquide de refroidissement d'huile selon la revendication 7, **caractérisé en ce que** le filtre à huile (35) en dérivation est agencé dans le même carter que le filtre à huile (3).

9. Module à liquide de refroidissement d'huile selon la revendication 7 ou 8, **caractérisé en ce que** le filtre à huile (35) en dérivation est configuré comme un séparateur centrifuge.

10. Module à liquide de refroidissement d'huile selon l'une des revendications précédentes, **caractérisé par**
une pompe à eau (38), sachant que le côté aspiration et le côté refoulement de la pompe à eau (38) ainsi que des raccords côté aspiration et/ou côté refoulement du circuit d'eau sont prévus dans le module (1) à liquide de refroidissement d'huile,
et un thermostat (41),
lequel est agencé du côté entrée, donc sur le côté aspiration de la pompe à eau (38),
et configuré de telle sorte qu'en fonction de la température du liquide de refroidissement,
soit il débloque un petit circuit de liquide de refroidissement dénommé circuit de court-circuit contournant un radiateur à liquide de refroidissement aboutissant à la pompe à eau (38),
soit il débloque un grand circuit de liquide de refroidissement passant par le radiateur à liquide de refroidissement aboutissant à de la pompe à eau (38),
sachant que dans le module (1) à liquide de refroidissement d'huile est prévu un canal de court-circuit aboutissant au thermostat (41), lequel canal forme un tronçon du circuit de court-circuit.

11. Module à liquide de refroidissement d'huile selon l'une des revendications précédentes, **caractérisé en ce qu'**a été prévu un thermostat (41) configuré en vanne à anneau obturateur.

12. Module à liquide de refroidissement d'huile selon l'une des revendications précédentes, **caractérisé en ce que** des orifices de remplissage ont été prévus pour l'huile et le liquide de refroidissement.

13. Module à liquide de refroidissement d'huile selon l'une des revendications précédentes, **caractérisé en ce que** dans l'échangeur thermique (7) les deux liquides sont guidés à contre-courant en diagonale.

14. Module à liquide de refroidissement d'huile selon l'une des revendications précédentes,
**caractérisé par** un raccord (45) conduisant au carter de vilebrequin du moteur thermique, sachant qu'à l'intérieur du module (1) à liquide de refroidissement d'huile ont été prévus plusieurs canaux aboutissant à ce raccord (45), canaux qui servent de conduite retour d'un filtre (35) à huile en dérivation, ainsi que de conduite d'écoulement du filtre à huile (3), ainsi que de canal de remplissage affecté à un orifice de remplissage d'huile.

15. Module à liquide de refroidissement d'huile selon l'une des revendications précédentes, **caractérisé en ce que** des raccords prévus sur le côté refoulement du liquide de refroidissement dans le module (1) à liquide de refroidissement d'huile - tels que le raccord (30) pour dispositif servant à refroidir un circuit de retour des gaz d'échappement, et le raccord (25) pour dispositif servant à tempérer le carburant - ont été réunis en un seul canal présentant un seul orifice de sortie situé contre le module (1) à liquide de refroidissement d'huile.

16. Module à liquide de refroidissement d'huile selon l'une des revendications précédentes, **caractérisé en ce que** des raccords prévus sur le côté aspiration du liquide de refroidissement dans le module (1) à liquide de refroidissement d'huile - tels que le raccord (28) pour dispositif servant à refroidir un compresseur pneumatique ou le raccord pour dispositif servant à refroidir un générateur - ont été réunis en un seul canal présentant un seul orifice d'admission situé contre le module (1) à liquide de refroidissement d'huile.

17. Module à liquide de refroidissement d'huile selon l'une des revendications précédentes, **caractérisé en ce que** les canaux affectés aux côtés refoulement et aspiration de la pompe à eau (38) sont séparés par une paroi.
